Europäisches Patentamt

European Patent Office

Office européen des brevets

(19)

(11) Veröffentlichungsnummer: **0 288 926**
**A2**

(12) # EUROPÄISCHE PATENTANMELDUNG

(21) Anmeldenummer: 88106489.3

(22) Anmeldetag: 22.04.88

(51) Int. Cl.4: **H05B 6/64** , **A47J 27/04**

(30) Priorität: 25.04.87 DE 3713926
14.04.88 DE 3812468

(43) Veröffentlichungstag der Anmeldung:
**02.11.88 Patentblatt 88/44**

(84) Benannte Vertragsstaaten:
**AT ES FR GB IT NL SE**

(71) Anmelder: **Neumüller, Hermine**
**Feursstrasse 63**
**D-8037 Olching(DE)**

(72) Erfinder: **Neumüller, Hermine**
**Feurstr. 63**
**D-8037 Olching(DE)**
Erfinder: **Kuratko, Ursula**
**Wolfratshauserstrasse 228a**
**D-8000 München 71(DE)**

(74) Vertreter: **Kuratko, August, Dr.**
**Eisenbahnstrasse 3a**
**D-6750 Kaiserslautern(DE)**

(54) Metallischer Kochbehälter zum Garen von Speisen mittels Dampf in einem Mikrowellenherd.

(57) Um bei einem Kochbehälter (1) zum Garen von Speisen in einem Mikrowellenherd elektrischen Überschlägen zwischen dem metallischen Kochbehälter (1) und dem Metalldeckel (2) vorzubeugen, ist es erforderlich, diese Teile räumlich voneinander zu trennen. Zu diesem Zweck sind der Metalldeckel (2) und der Kochbehälter (1) relativ zueinander in der Weise ausgebildet, daß das Zwischenmedium, z.B. aus Kunststoff, zum Großteil gleichzeitig auch ein erforderliches Zubehör zum Kochbehälter ist. Dieses Zwischenmedium stellt sich als Wasserbehälter (3) dar, der unterhalb seines oberen Randes (8) eine allseitig umlaufend rechtwinklig abstehende Randleiste (10) aufweist, in dem der metallische Kochbehälter eingesetzt ist. Abgedeckt wird dieser Kochbehälter mittels des Metalldeckels (2), der sich auf den umlaufend abstehenden Seitenrand (10) des Wasserbehälters (3) mit seinem unteren Rand (11) seines, den Wasserbehälter (3) und den Kochbehälter (1) überlappenden Randbereichs (5) abstützt. Diese Trennung der metallischen Medien (1 u. 2) ermöglicht ein Garen von Speisen in einem Mikrowellenherd ohne Funkenüberschlag vom Metallteil (1) zum Metallteil (2).

Fig. 1

# Metallischer Kochbehälter zum Garen von Speisen mittels Dampf in einem Mikrowellenherd

Die Erfindung betrifft einen metallischen Kochbehälter mit einem Metalldeckel und einem Wassergefäß zum Garen von Speisen mittels Dampf in einem Mikrowellenherd, wobei der Deckel einen den oberen Randbereich des Kochbehälters überlappenden, parallel zum Kochbehälterrand verlaufenden Deckelrand aufweist und der Boden des Behälters über die Oberfläche verteilte Durchbrechungen vorgesehen hat.

Kochbehälter eingangs erwähnter Art sind bekannt. Bei diesen wird das Lebensmittel, z.B. Würstchen, Fleisch, Gemüse und dgl. in Spezialgeschirr aus Aluminium gegart oder erwärmt, wobei der Garvorgang nicht unmittelbar durch die Mikrowellenenergie, sondern mittelbar durch Wasserdampf erfolgen soll. Zu diesem Zweck wird der Kochbehälter, z.B. ein Aluminiumgeschirr am Boden mit Durchbrechungen und dgl. in ein zum Teil mit Wasser gefülltes Gefäß, z.B. aus Glas oder Keramik gestellt, so daß rasch gebildeter Wasserdampf von unten her in das Aluminiumgeschirr eintreten kann, wobei gleichzeitig die Lebensmittel gegenüber einer Mikrowelleneinwirkung abgeschirmt werden.

Das zweiteilige Aluminiumgeschirr - Topf und Deckel -ist mit einer elektrolytisch erzeugten Aluminiumschicht versehen, um beim praktischen Einsatz Funkenbildungen und somit Einbrennspuren am Aluminiumgeschirr, insbesonders an den Berührungsstellen zwischen Topf und Deckel vorzubeugen. Wie der Gebrauch derartiger Kochgefäße nunmehr bezeigt hat, ist es trotz der Eluxierung zu erheblichen Funkenbildungen zwischen Metalldeckel und Metallgefäß gekommen. Dies wird noch dadurch verstärkt, daß der Deckel, den durch eine Glas-oder Keramikschüssel gebildeten Dampfraum abschließend, nur lose auf den oberen Rand dieser Schüssel aufgelegt wird und so mit dem in der Schüssel eingesetzten Aluminiumtopf bereits bei geringer Erschütterung in unmittelbare direkte Berührung kommt.

Aufgabe der Erfindung ist die Ausbildung eines metallischen Kochbehälters nach dem Oberbegriff des Patentanspruchs, wobei einerseits keine den Kochbehälter zerstörenden Funkenbildungen bzw. elektrische Überschläge mehr auftreten können und andererseits der im Garraum erzeugte Dampfdruck regulierbar ist.

Die Aufgabe wird bei einem metallischen Kochbehälter mit einem Metalldeckel und einem Wassergefäß zum Garen von Speisen mittels Dampf in einem Mikrowellenherd, wobei der Deckel einen den oberen Randbereich des Kochbehälters überlappenden, parallel zum Kochbehälterrand verlaufenden Deckelrand aufweist und der Boden des Behälters über die Oberfläche verteilte Durchbrechungen vorgesehen hat, dadurch gelöst, daß das den Kochbehälter aufnehmende Wassergefäß aus Kunststoff hoher Temperaturbeständigkeit und Festigkeit unterhalb von seinem oberen Rand eine von der Außenwand senkrecht abstehende, allseitig umlaufende Randleiste zum allfälligen Abstützen des unteren Randes des Metalldeckels aufweist, wobei zusammenwirkende Randbereiche, und zwar ein oberer Randbereich des Wassergefäßes und ein diesen überlappender unterer Randbereich des Metalldeckels zum Aufsetzen oder Aufschieben auf das Wassergefäß formgleich oder zum Aufschrauben formschlüssig relativ zueinander ausgebildet sind.

Die Erfindung ist an Hand der Zeichnung, in der mehrere Ausführungsbeispiele davon dargestellt sind, näher erläutert. Es zeigen:

Figur 1 einen metallischen Kochbehälter, bei dem der auf ihn aufsetzbare Metalldeckel mit seinem unteren Rand auf einer umlaufenden Randleiste eines Wasserbehälters abgestützt ist, im Schnitt,

Figur 2 einen metallischen Kochbehälter mit einem außenseitig auf den oberen Rand des Wassergefäßes formschlüssig aufschraubbaren Metalldeckel in schematischer Darstellung in Teilansicht im Schnitt,

Fig.3 einen metallischen Kochbehälter mit einem innenseitig auf den oberen Rand des Wassergefäßes formschlüssig aufschraubbaren Metalldeckel, in Teilansicht im Schnitt und

Figur 4 einen metallischen Kochbehälter, bei dem der auf ihn aufsetzbare Metalldeckel mit seinem obersten umlaufenden Innenkantenteil auf den oberen Rand des Wasserbehälters abgestützt ist, im Schnitt.

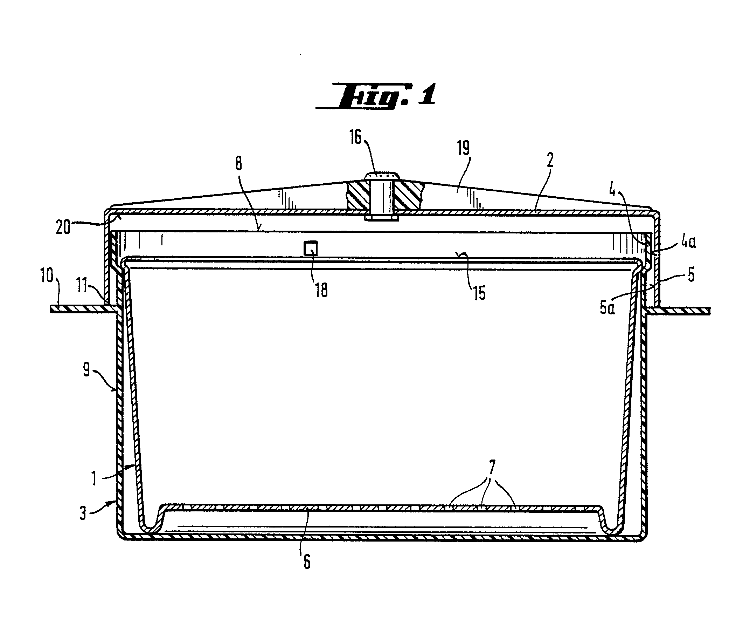

Gemäß Figur 1 hat ein Boden 6 eines metallischen Kochbehälters 1 über seine Oberfläche verteilte Durchbrechungen 7 für den Dampfdurchgang in den Garraum vorgesehen. Ein den Kochbehälter 1 aufnehmendes Wassergefäß 3 ist aus Kunststoff hoher Temperaturbeständigkeit und Festigkeit und weist unterhalb vom oberen Rand 8 auf seiner Außenwand 9 eine senkrecht abstehende umlaufende Randleiste 10 zum Abstützen eines unteren Randes 11 des Metalldeckels 2 beim Aufsetzen auf das Wassergefäß 3 auf. Hierbei verläuft ein oberer senkrechter Randbereich 5 eines Metalldeckels 2 eines Wassergefäßes 3 als eine glatte rundumlaufende Fläche, konzentrisch parallel zu einem gegenüberliegenden benachbarten glatten rundumlaufenden Randbereich 4 des Wassergefäßes 3, auf dem der Metalldeckel 2 zum Abdecken des Wassergefäßes 3 aufgesetzt werden kann. Dabei stützt sich der nach unten gerichtete Rand 11 des Randbereichs 5 zum berührungslosen Distanzieren des Metalldeckels 2 von einem Metallkochbehälter 1 auf einer umlaufend am Wassergefäß 3 vorgesehenen, abstehend angeordneten Randleiste 10 ab.

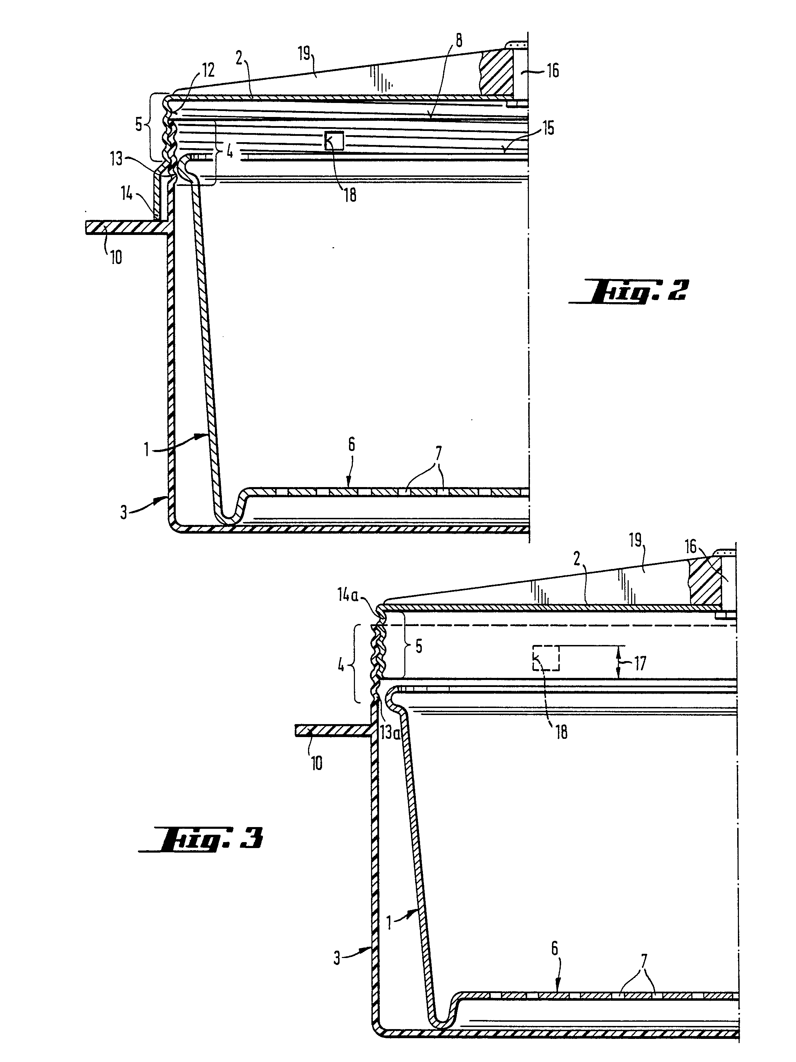

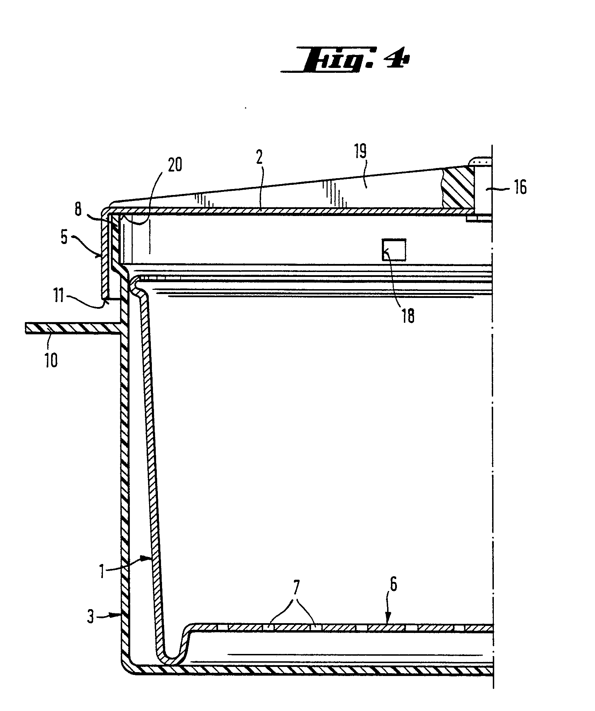

In weiterer Ausgestaltung der Erfindung ist, wie aus Figur 2 und 3 ersichtlich, jeweils ein metallischer Kochbehälter 1 in Teilansicht dargestellt, bei denen die oberen Randbereiche 4 des Wassergefäßes 3 mit den jeweils parallel dazu verlaufenden, sie innen oder außen überlappenden Randbereichen 5 des Metalldeckels 2 verschraubbar sind.

So ist nach Figur 2 der untere Deckelrandbereich 5 des Metalldeckels 2 als ein Gewinde 12 (Schraubengewinde) ausgebildet, das korrespondierend mit einem entsprechend dazu ausgebildeten Gewinde 13 des oberen Randbereiches 4 des Wassergefäßes 3 als Muttergewinde zusammenwirkt, so daß die beiden Teile mit dem Gewinde 12 am Deckelrandbereich 5 über das Gewinde 13 am oberen Randbereich 4 des Gefäßes 3, den Dampfaustritt über eine Durchbrechung 18 sogar stufenlos regulierend, miteinander schraubverbunden werden können. Zu diesem Zweck ist im Hubweg 17 des unteren Deckelrandbereichs 5 - im dahinterliegenden Randbereich 4 des Wassergefäßes 3 - wenigstens eine schlitzförmige Durchbrechung 18, die mit der Außenluft in Verbindung gebracht werden kann, vorgesehen, (Fig. 3). Diese Durchbrechung 18 wird mit dem unteren Deckelrand 11 bei Verschließen oder Öffnen des Wasserbehälters 3 mehr oder weniger geöffnet oder geschlossen, wodurch ein im Behälterinneren kontrollierter größerer oder kleinerer Dampfdruck durch mögliches Ableiten eines Teiles des Dampfdruckes nach außen eingestellt werden und so der Druck stufenlos reguliert werden kann.

Nach Figur 3 ist es auch denkbar, ein Gewinde 13a im oberen Randbereich 4 des Wassergefäßes 3 vorzusehen und den Metalldeckel 2 von innen her über ein Gewinde 14a, das im unteren Deckelrandbereich 5 angeordnet ist, mit dem Wassergefäß 3 zu verschrauben. Das nach unten (Fig. 2) hin weisende verschraubbare Deckelrandende 14 ist vom Gewinde 12 abgesetzt und verläuft als gerade Parallele zur oberen Randfläche 15 des Metallbehälters 1. Der obere Rand 15 des Metallbehälters 1 endet maßstäblich etwa 2 mm unterhalb des oberen Randes 8 des Wassergefäßes 3.

Im Rahmen der Erfindung ist es bei einem metallischen Kochbehälter nach dem Oberbegriff möglich, auch ohne Randleiste 10 zum Distanzieren der beiden Metallteile 1 und 2 voneinander auszukommen, so daß diese Randleiste im weiteren nur mehr zum konzentrischen Aufsetzen bzw. beim reibschlüssigen Aufschieben oder formschlüssigen Aufschrauben des unteren Deckelrandbereichs 5 auf den oberen Randbereich 4 des Wassergefäßes 3 hilfsweise dienlich ist. Zum Distanzhalten des Metalldeckels 2 vom Metallbehälter 1 wird, wie aus Figur 4 ersichtlich ist, nun ein im Metalldeckel 2 zu oberst liegender, rundumlaufender Innenkantenteil 20 verwendet, der durch Ausformen des nach untenhin gerichteten Randbereichs 5 des Deckels 2 entstanden ist. Dieser Innenkantenteil 20 muß jedoch als Abstützrand zum Abstützen auf dem nach aufwärts weisenden oberen umlaufenden Rand 8 des Wassergefäßes mit diesem im wesentlichen deckungsgleich und der zum Ab-und Zudecken des Kochbehälters durch axiales Verschieben am oberen Randbereich 4 des Wasserbehälters auf diesen aufsitzende, ringförmige Randbereich 5 des Deckels 2 entsprechend reibschüssig darauf einpaßbar ausgebildet sein.

Zum Distanzhalten des Metalldeckels 2 vom Metallbehälter 1 können auch eine im Metalldeckel 2 ausgebildete, rundumlaufende, abgeschrägte Innenflächenkante oder aber auch entsprechend abgeschrägte Flächenteile als Abstützrand auf dem umlaufenden Rand 8 des Wassergefäßes 3 dienlich sein. Es ist natürlich auch denkbar, an Stelle einer den maßstäblichen Gegebenheiten des metallischen Kochbehälters anpaßbaren Abstützeinrichtung, wie sie der Innenkantenteil 20 darstellt, die gesamte Innenfläche des Deckels 2 kontinuierlich oder in seinem Innern abgestuft abzuschrägen oder kugelförmig abzurunden, so daß der Deckel 2 zum Abstützen an beliebigen Stellen auf einen oberen Rand des Randbereichs 4 des Deckels 2 und selbst für Töpfe unterschiedlicher Größen bei deren Abdecken ohne wesentliche Modifikation herangezogen werden kann.

Vorsorglich ist den Sicherheitsvorschriften für unter Druck stehende Kochgefäße entsprechend am Metalldeckel 2 eine sicherheitsventilartige Anordnung 16 vorgesehen.

Zum Handhaben des Deckels, insbesonders zum Aufschrauben auf das Wassergefäß 3, ist ein leistenförmiges Griffstück 19 vorgesehen, das sich mittig über die ganze Deckeloberfläche erstreckt, so daß der Deckel leicht auf-und gegebenenfalls leicht wieder abschraubbar bzw. auf-oder abschiebbar ist. Zweckmäßig ist hierbei die sicherheitsventilartige Anordnung 16 mit einer dieser Stelle entsprechenden Durchbrechung der Deckeloberfläche mit dem Griffstück integriert.

Es ist auch denkbar, daß der vorliegende, als runder Behälter beschriebene Kochtopf oval, quadratisch oder polygon ausgebildet sein kann. In diesem Fall ist es aber nötig, die formschlüssig zusammenzufügenden Teile von diesen abweichenden Formgebunden im Oberteil des Kochgeschirrs abzusetzen und entsprechend vorstehend beschriebener Ausgestaltung rund zu fertigen.

## Ansprüche

1. Metallischer Kochbehälter mit einem Metalldeckel und einem Wassergefäß zum Garen von Speisen mittels Dampf in einem Mikrowellenherd, wobei der Deckel einen den oberen Randbereich des Kochbehälters überlappenden, parallel zum Kochbehälterrand verlaufenden Deckelrand aufweist und der Boden des Behälters über die Oberfläche verteilte Durchbrechungen vorgesehen hat, dadurch gekennzeichnet, daß das den Kochbehälter (1) aufnehmende Wassergefäß (3) aus Kunststoff hoher Temperaturbeständigkeit und Festigkeit unterhalb von seinem oberen Rand (8) eine von der Außenwand (9) senkrecht abstehende, allseitig umlaufende Randleiste (10) zum allfälligen Abstützen eines unteren Randes (11) eines Metalldeckels (2) aufweist, wobei zusammenwirkende Randbereiche (4, 5), und zwar ein oberer Randbereich (4) des Wassergefäßes (3) und ein diesen überlappender unterer Randbereich (5) eines Metalldeckels (2) zum Aufsetzen und/oder Abschließen des Wassergefäßes (3) formgleich und/oder formschlüssig verschraubbar relativ zueinander ausgebildet sind.

2. Metallischer Kochbehälter nach Anspruch 1, dadurch gekennzeichnet, daß der obere Rand (4) des Wassergefäßes (3) mit einem parallel dazu verlaufenden, ihn überlappenden unteren Deckelrandbereich (5) verschraubbar ist.

3. Metallischer Kochbehälter nach Anspruch 1, dadurch gekennzeichnet, daß der untere Randbereich (5) des Metalldeckels (2) als ein Gewinde (12) ausgebildet ist, das mit einem entsprechend vorgesehenen Gewinde (13) im oberen Randbereich (4) des Wassergefäßes (3) zusammenwirkt.

4. Metallischer Kochbehälter nach den Ansprüchen 1 und 3, dadurch gekennzeichnet, daß ein Gewinde (13a) im oberen Randbereich (4) des Wassergefäßes (3) vorgesehen ist und der Metalldeckel (2) vom Behälterinneren her über ein Gewinde (14a), das im unteren Bereich des Deckelrandes (5) angeordnet ist, verschraubt werden kann.

5. Metallischer Kochbehälter nach den Ansprüchen 1 bis 4, dadurch gekennzeichnet, daß im Metalldeckel (2) eine sicherheitsventilartige Anordnung (16) vorgesehen ist.

6. Metallischer Kochbehälter nach den Ansprüchen 1 bis 5, dadurch gekennzeichnet, daß im Hubweg (17) des unteren Deckelrandbereiches (5) des Deckels (2) im oberen, gegenüberliegenden Randbereich (4) des Wassergefäßes (3) wenigstens eine schlitzförmige Durchbrechung (18) vorgesehen ist, die durch den unteren Deckelrandbereich (5) stufenlos abdeckbar und verschließbar ist.

7. Metallischer Kochbehälter nach den Ansprüchen 1 bis 6, dadurch gekennzeichnet, daß der Deckel zum Handhaben auf seiner Oberfläche ein leistenförmiges, diametral verlaufendes Griffstück (19) aufweist.

8. Metallischer Kochbehälter nach Anspruch 1, dadurch gekennzeichnet, daß der den oberen Bereich des Wasserbehälters konzentrisch überlappende, parallel zum oberen Randbereich (4) verlaufende untere Rand (11) des Metalldeckels (2) hochgezogen, und daß der obere innere Teil davon in der Weise ausgebildet ist, daß zum Distanzhalten des Metalldeckels (2) vom oberen Rand (15) des Metallbehälters (1) der Metalldeckel im Bereich seines zu oberst liegenden, rundumlaufenden Innenkantenteils (20), der durch senkrechtes Ausformen des nach unten gerichteten Randes (5) des Metalldeckels entstanden ist, am oberen Rand (8) des Wassergefäßes (3) abstützbar ist.

9. Metallischer Kochbehälter nach den Ansprüchen 1 und 9, dadurch gekennzeichnet, daß der Innenkantenteil (20) als Abstützrand zum Abstützen auf dem nach aufwärts weisenden, oberen umlaufenden Rand (8) des Wassergefäßes (3) mit diesem im wesentlichen deckungsgleich und der zum Ab- und Zudecken des Kochbehälters durch axiales Verschieben am oberen Randbereich (4) des Wasserbehälters (3) auf diesem aufsitzende ringförmige Randbereich des Deckels (2) entsprechend reibschlüssig darauf einpaßbar ausgebildet ist.

10. Metallischer Kochbehälter nach den Ansprüchen 1, 8 und 9, dadurch gekennzeichnet, daß zum Distanzhalten des Metalldeckels (2) vom Metallbehälter (1) wenigstens eine im Metalldeckel (2) ausgebildete, rundumlaufende, abgeschrägte Innenflächenkante oder aber auch entsprechend abgeschrägte Flächenteile als Abstützrand auf dem umlaufenden Stützrand (8) des Wassergefäßes (3) dienlich sind.

# Fig. 1

Fig. 2

Fig. 3

## Fig. 4